(19) Europäisches Patentamt
European Patent Office
Office européen des brevets

(11) **EP 4 177 839 A1**

(12) **DEMANDE DE BREVET EUROPEEN**

(43) Date de publication:
**10.05.2023 Bulletin 2023/19**

(21) Numéro de dépôt: **22200396.4**

(22) Date de dépôt: **07.10.2022**

(51) Classification Internationale des Brevets (IPC):
***G06T 7/80*** *(2017.01)*

(52) Classification Coopérative des Brevets (CPC):
**G06T 7/80;** G06T 2207/30196; G06T 2207/30232;
G06T 2207/30244

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **04.11.2021 FR 2111700**

(71) Demandeur: **Idemia Identity & Security France
92400 Courbevoie (FR)**

(72) Inventeur: **PERRAULT, Pierre
92400 Courbevoie (FR)**

(74) Mandataire: **Idemia
2, place Samuel de Champlain
92400 Courbevoie (FR)**

(54) **PROCÉDÉ DE DÉTERMINATION DE PARAMÈTRES DE CALIBRATION D'UN DISPOSITIF DE PRISE DE VUE ET PRODUIT PROGRAMME D'ORDINATEUR ASSOCIÉ**

(57) L'invention porte sur un procédé de détermination de paramètres de calibration $(f, \theta, c)$ d'un dispositif de prise de vue (10) par un calculateur (20), à partir d'au moins une image $(i_1, i_2, i_3)$ comprenant au moins une personne, comprenant les étapes suivantes :
- une étape de sélection par le calculateur (20) d'une pluralité de paires de points (pt, pp) dans l'au moins une image $(i_1, i_2, i_3)$, chaque paire de points (pt, pp) comprenant un point tête (pt) et un point pied (pp) associé à la personne,
- une étape de détermination par le calculateur (20) des paramètres de calibration $(f, \theta, c)$, à l'aide d'un estimateur bidimensionnel (21) apte à déterminer une des coordonnées image estimées $(x't, y't)$ d'un point tête (pt) en fonction des coordonnées image du point pied (pp) d'une personne et des paramètres de calibration $(f, \theta, c)$, la détermination des paramètres de calibration $(f, \theta, c)$ comprenant une minimisation d'erreur entre lesdites coordonnées image estimées $(x't, y't)$ du point tête (pt) et lesdites coordonnées image du point tête (pt) correspondante.

Figure 3

EP 4 177 839 A1

**Description**

La présente invention concerne la surveillance par imagerie, et concerne plus précisément un procédé de détermination automatique de paramètres de calibration d'un dispositif de prise de vue, en particulier pour estimer des distances réelles à partir d'images d'un dispositif de prise de vue.

Il est connu de l'état de la technique des algorithmes de détection, par exemple mis en œuvre grâce à des réseaux de neurones notamment de type à convolution, ou CNN (Convolutional Neural Networks en anglais), permettant d'identifier des éléments d'intérêt sur des images

Par exemple, on sait détecter des personnes ou des visages sur des images de caméra de sécurité.

Partant de là, si l'on connait des paramètres de la caméra (dits paramètres de calibration) telle que la hauteur à laquelle elle est disposée, son angle d'inclinaison et sa distance focale, de simples considérations géométriques et des projections permettent d'estimer les grandeurs des éléments d'intérêts détectés, et de façon générale de mesurer toute distance « réelle » dans la scène observée.

La difficulté est essentiellement liée au fait de déterminer facilement les paramètres de calibration. En effet, des milliers de caméras sont déjà installées sans que l'on connaisse leurs paramètres. Il serait bien entendu possible d'envoyer des personnes prendre des mesures sur toutes ces caméras, mais ce serait long, coûteux et contraignant.

Il existe également le besoin d'estimer des distances réelles à partir d'images d'un dispositif de prise de vue dont on ne connaît aucune caractéristique, par exemple à partir d'une vidéo mise en ligne sur internet ou bien à partir d'une vidéo prise selon un dispositif mobile dont la hauteur et l'inclinaison varient peu dans le temps.

Il a été proposé une méthode de calibration automatique décrite dans le document « A simplified nonlinear régression method for human height estimation in video surveillance », Li, S., Nguyen, V.H., Ma, M. et al.

Cette méthode a pour finalité d'estimer la hauteur des personnes à partir d'une vidéo de caméra de surveillance. Dans cette méthode, on choisit une personne de taille connue marchant devant la caméra, de sorte à acquérir plusieurs images dans lesquelles la personne est à diverses positions de l'espace. Ensuite, par régression sur les positions de sa tête et de ses pieds on peut déterminer les paramètres de calibration.

Cette méthode se base sur l'hypothèse qu'une personne a une représentation essentiellement verticale dans une image et que par conséquent la composante selon un axe vertical des ordonnées d'un vecteur pied-tête apporte plus d'information que la composante selon un axe horizontal des abscisses dudit vecteur pied-tête, ladite composante selon l'axe des ordonnées pouvant être associée à la hauteur de la personne via les paramètres de calibration. Les paramètres de calibration peuvent ainsi être déterminés de manière simple, selon des équations mathématiques simplifiées négligeant les termes selon l'axe des abscisses.

Cette méthode a l'inconvénient de convenir pour une utilisation restreinte d'estimation réelle de la hauteur de personnes dans des images prises par une caméra, et de requérir un scénario de calibration spécifique préalable pendant lequel une personne de taille connue se déplace devant ladite caméra.

En effet, cette méthode ne donne pas des paramètres de calibration satisfaisants pour calculer n'importe quelles distances réelles à partir des images. Lorsque les représentations des personnes sur les images sont inclinées par un effet de perspective, les hauteurs estimées sont imprécises.

Alternativement, il a été proposé dans le document « Surveillance Camera Autocalibration based on Pedestrian Height Distributions », Jingchen Liu, Robert T. Collins, Yanxi Li, de s'appuyer sur l'estimation des points de fuite pour évaluer les paramètres de calibration de la caméra. On peut ainsi utiliser n'importe quelles images de la caméra tant qu'elles représentent beaucoup de personnes supposées verticales (sans devoir demander spécifiquement à un sujet de marcher).

Cependant, on constate qu'estimer les points de fuite reste une tâche complexe en soi, parfois difficile à généraliser et constitue un objectif trop coûteux, de sorte que cette méthode n'apporte pas satisfaction.

L'invention vise à résoudre les problèmes susmentionnés de l'état de la technique en proposant un procédé de détermination de paramètres de calibration d'un dispositif de prise de vue complètement automatique, simple, robuste et universel.

L'invention porte sur un procédé de détermination de paramètres de calibration d'un dispositif de prise de vue par un calculateur, à partir d'au moins une image acquise par le dispositif de prise de vue comprenant plusieurs personnes ou d'une pluralité d'images (i, $i_1$-$i_N$) acquises par le dispositif de prise de vue (10) à des instants différents dans le temps comprenant au moins une personne, le procédé de détermination de paramètres de calibration comprenant les étapes suivantes :

- une étape de sélection par le calculateur d'une pluralité de paires de points dans l'au moins une image, chaque paire de points comprenant un point tête associé à la tête d'une personne et un point pied associé aux pieds de ladite personne, chaque point d'une paire de points étant repéré dans l'au moins une image par des coordonnées image comprenant une abscisse image et une ordonnée image, chaque paire de points définissant un segment pied-tête dans le monde réel tridimensionnel de l'environnement du dispositif de prise de vue,

- une étape de détermination par le calculateur des paramètres de calibration, dans laquelle le calculateur comprend un estimateur apte à déterminer une ordonnée image estimée d'un point tête en fonction de l'ordonnée image du point pied d'une personne et des paramètres de calibration par une approximation que dans le monde réel tridimensionnel de l'environnement du dispositif de prise de vue, tous les segments pied-tête ont une même hauteur prédéterminée et sont verticaux,

l'estimateur étant bidimensionnel et étant en outre apte à déterminer une abscisse image estimée d'un point tête en fonction des coordonnées image du point pied, la détermination des paramètres de calibration comprenant une minimisation d'erreur entre lesdites coordonnées image estimées du point tête par l'estimateur bidimensionnel et lesdites coordonnées image du point tête correspondante.

Selon un aspect de l'invention, l'étape de sélection comprend la détermination du point pied comme un point milieu entre un point pied droit et un point pied gauche.

Selon un aspect de l'invention, les paramètres de calibration comprennent :

- un angle d'inclinaison transverse θ du dispositif de prise de vue,
- une distance focale f du dispositif de prise de vue,
- une hauteur c à laquelle est disposé le dispositif de prise de vue,

l'estimateur déterminant les coordonnées image estimées (x't, y't) en fonction des coordonnées image du point pied (xp, yp) selon les équations suivantes :

$$x't = \frac{\cos(\theta) \cdot c \cdot \dfrac{\sin(\theta) \cdot yp - f \cdot \cos(\theta)}{\cos(\theta) \cdot yp + f \cdot \sin(\theta)} - c \cdot \sin(\theta)}{H \cdot \sin(\theta) + \cos(\theta) \cdot c \cdot \dfrac{\sin(\theta) \cdot yp - f \cdot \cos(\theta)}{\cos(\theta) \cdot yp + f \cdot \sin(\theta)} - c \cdot \sin(\theta)} \cdot xp_{(}$$

et

$$y't = \frac{H \cdot \cos(\theta) - \sin(\theta) \cdot c \cdot \dfrac{\sin(\theta) \cdot yp - f \cdot \cos(\theta)}{\cos(\theta) \cdot yp + f \cdot \sin(\theta)} - c \cdot \cos(\theta)}{H \cdot \sin(\theta) + \cos(\theta) \cdot c \cdot \dfrac{\sin(\theta) \cdot yp - f \cdot \cos(\theta)}{\cos(\theta) \cdot yp + f \cdot \sin(\theta)} - c \cdot \sin(\theta)} \cdot f$$

Selon un aspect de l'invention, la minimisation d'erreur comprend l'utilisation d'un algorithme de régression minimisant une fonction d'erreur quadratique moyenne entre lesdites coordonnées image estimées du point tête par l'estimateur et lesdites coordonnées image du point tête correspondante.

Selon un aspect de l'invention, la minimisation d'erreur comprend une recherche exhaustive des paramètres de calibration (f, θ, c) sur un domaine discrétisé prédéterminé.

Selon un aspect de l'invention, la minimisation d'erreur comprenant l'utilisation d'une méthode de descente de gradient.

Selon un aspect de l'invention, la minimisation d'erreur comprend deux étapes, une première étape comprenant une recherche exhaustive de paramètres de calibration intermédiaires sur un domaine discrétisé prédéterminé, et une deuxième étape comprenant l'utilisation d'une méthode de descente de gradient initialisée sur lesdits paramètres de calibration intermédiaires issus de la première étape.

Selon un aspect de l'invention, l'étape de sélection comprend en outre une étape de filtrage dans laquelle le calculateur filtre des paires de points de la pluralité de paires de points en fonction d'un critère de visibilité desdits points, pour la sélection de la pluralité de paires de points.

Selon un aspect de l'invention, l'au moins une image acquise par le dispositif de prise de vue est divisée en une pluralité de zones, la pluralité de paires de points étant sélectionnée par le calculateur dans l'étape de sélection de façon à ce que chaque zone comporte un nombre de paires de points inférieur ou égal à un seuil prédéterminé.

Selon un aspect de l'invention, la pluralité de paires de points est issue d'une pluralité d'images acquises par le dispositif de prise de vue, le nombre d'images correspondant à une période de temps d'enregistrement prédéfinie d'images par le dispositif de prise de vue.

Selon un aspect de l'invention, chaque image de la pluralité d'images est issue d'une sélection d'images du dispositif de prise de vue par le calculateur correspondant à une période supérieure à 100 ms.

L'invention porte également sur un produit programme d'ordinateur comprenant les instructions de programme mettant en œuvre les étapes du procédé de détermination de paramètres de calibration, lorsque les instructions de programme sont exécutées par un ordinateur.

D'autres avantages et caractéristiques de l'invention apparaîtront à la lecture de la description et des dessins.

La figure 1 représente un modèle géométrique de référentiel image et d'environnement réel.

La figure 2 représente un modèle en points de squelette d'une personne sur une image.

La figure 3 représente un exemple de système pour la mise en œuvre du procédé de détermination des paramètres de calibration selon l'invention.

La figure 4a représente les étapes du procédé de détermination des paramètres de calibration selon l'invention.

La figure 4b représente un mode de réalisation particulier d'une étape de minimisation du procédé de détermination des paramètres de calibration selon l'invention.

La figure 5a illustre une superposition de plusieurs images découpées en une pluralité de zones, avant une sélection de points par un calculateur de l'invention.

La figure 5b illustre la même superposition de plusieurs images de la figure 5a, après une sélection de points par le calculateur de l'invention

La figure 6 représente une superposition de cinq images sur lesquelles de déplacent trois personnes.

La figure 7 représente une image comprenant une multitude de personnes.

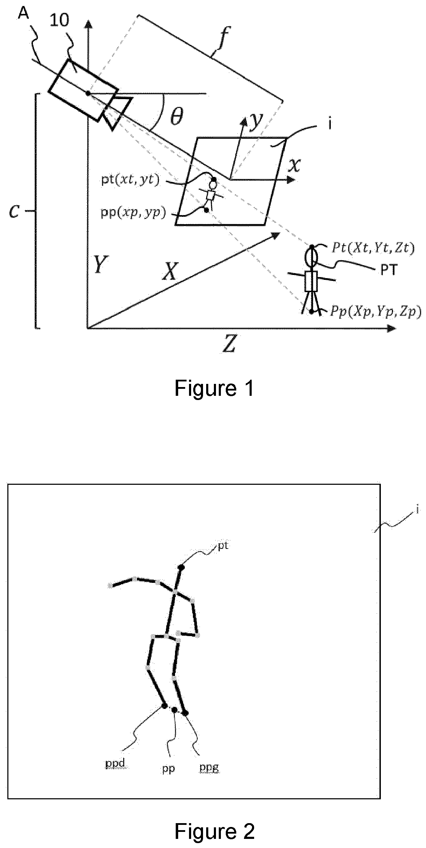

En référence à la figure 1, par paramètres de calibration du dispositif de prise de vue, on entend des paramètres permettant de mettre en correspondance les cordonnées spatiales d'un point dans le champ du dispositif de prise de vue, dites coordonnées « réelles » car exprimées dans un référentiel terrestre, avec les coordonnées planes de la représentation de ce point dans l'image acquise par le dispositif de prise de vue, dites coordonnées « image », c'est à dire sa projection.

Les paramètres de calibration sont représentés sur la figure 1 et sont :

- un angle $\theta$ d'inclinaison transverse du dispositif de prise de vue 10, c'est à dire l'angle de tangage définit par l'angle entre l'axe principal de la caméra A et une direction horizontale,
- une distance focale f du dispositif de prise de vue 10,
- une hauteur c à laquelle est disposée le dispositif de prise de vue 10.

Le procédé de l'invention comprend la détermination de chacun de ces trois paramètres de calibration. A noter qu'il reste tout à fait possible que l'un ou l'autre de ces trois paramètres soit connu, directement ou indirectement, par exemple un dispositif de prise de vue peut avoir une distance focale f calibrée, ou bien la hauteur c peut avoir été expressément choisie à la pose de la caméra.

La figure 1 représente un dispositif de prise de vue 10 disposé en hauteur par rapport au sol. L'environnement du dispositif de prise de vue est repéré dans le monde réel tridimensionnel par un référentiel terrestre dont l'origine est un point au sol à la verticale du dispositif de prise de vue 10. Les axes du référentiel terrestre comprennent un axe Y orienté vers le haut et passant par le dispositif de prise de vue 10, et deux axes X, Z localisés dans le plan du sol au-dessus duquel est disposé le dispositif de prise de vue 10. Le dispositif de prise de vue a pour coordonnées (X, Y, Z) = (0, c, 0) dans le repère terrestre.

Dans le champ de vision du dispositif de prise de vue 10 se trouve une personne se tenant debout. Dans le référentiel terrestre, la personne est repérée par un point tête Pt de coordonnées (Xt, Yt, Zt) associé à la tête de la personne et un point pied Pp de coordonnées (Xp, Yp, Zp) associé aux pieds de la personne. Le point tête Pt et le point pied Pp définissent un segment pied-tête PT dans le monde réel tridimensionnel de l'environnement du dispositif de prise de vue 10.

Dans une image i acquise par le dispositif de prise de vue 10, il est défini un repère image bidimensionnel. Le repère image a pour origine le centre de l'image i et comprend deux axes d'abscisse x horizontal et d'ordonnée y vertical. Dans le référentiel image, le point tête pt d'une personne a pour coordonnées (xt, yt), le point pied pp d'une personne a pour coordonnées (xp, yp).

Le dispositif de prise de vue 10 est préférentiellement fixe, au moins en ce qui concerne les paramètres de calibration. Elle pourrait par exemple être montée sur un rail autorisant des translations horizontales. Néanmoins, le dispositif de prise de vue pourrait être totalement mobile à condition que ses mouvements soient connus, l'homme du métier saura en effet appliquer les équations de changement de repère correspondantes.

Certaines hypothèses sont en outre avantageusement faites sur le contexte :

- l'angle de roulis du dispositif de prise de vue 10 est supposé négligeable,
- l'angle de lacet du dispositif de prise de vue 10 est supposé négligeable,
- la distorsion dans une image i acquise par le dispositif de prise de vue 10 est supposée négligeable,
- le centre optique du dispositif de prise de vie 10 correspond au centre de l'image i,
- le sol de l'environnement du dispositif de prise de vue 10, dans le champ de vision du dispositif de prise de vue 10, est plat.

La figure 2 illustre une image i sur laquelle une personne est modélisée dans l'image i par un modèle en quinze points squelette comprenant un point tête pt, un point pied gauche ppg et un point pied droit ppd.

Avantageusement, le point pied pp de l'invention est le point milieu entre le point pied gauche ppg et le point pied droit ppd.

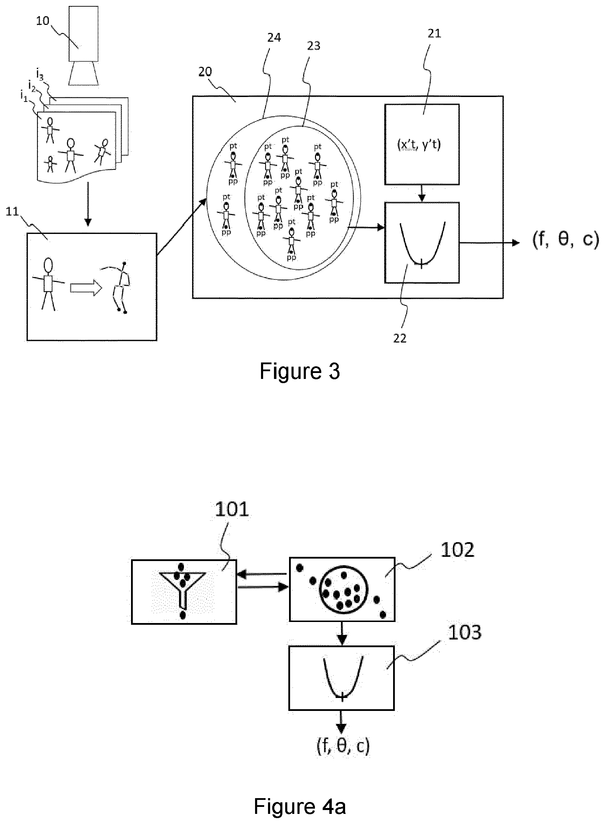

La figure 3 illustre un système comprenant un dispositif de prise de vue 10, un détecteur de personnes 11 et un calculateur 20.

Le dispositif de prise de vue 10 est apte à acquérir des images $i_1$, $i_2$, $i_3$ d'une scène de son environnement. Le dispositif de prise de vue 10 est de manière préférentielle une caméra vidéo, mais peut être un appareil photo apte à prendre par exemple des images d'une scène en rafale.

Le détecteur de personnes 11 est configuré pour détecter des personnes dans des images $i_1$, $i_2$, $i_3$ acquises par le dispositif de prise de vue 10, et à déterminer des points clés d'une personne par exemple pour générer un squelette de quinze points comme illustré en figure 2. Avantageusement, les points clés comprennent un point tête pt correspondant au sommet de la tête de la personne, un point pied gauche ppg correspondant au talon du pied gauche de la personne, un point pied droit ppd correspondant au talon du pied droit de la personne

Le détecteur de personnes 11 peut être scindé en deux sous dispositifs distincts apte à communiquer entre eux, un premier dispositif étant apte à détecter des personnes dans l'image i et un deuxième dispositif étant apte à générer des points de squelette correspondant à la personne détectée par le premier dispositif, par exemple par régression.

Chaque point de squelette ppg, ppd, pt est associé à des coordonnées bidimensionnelles dans l'image $i_1$, $i_2$, $i_3$.

Les coordonnées bidimensionnelles des points de squelette sont utilisables par le calculateur 20 pour exécuter le procédé de l'invention, directement ou après un éventuel changement de repère si les coordonnées bidimensionnelles ne sont pas référencés dans le repère image tel que décrit et illustré sur la figure 1.

Avantageusement, chaque point squelette ppg, ppd, pt est en outre associé à un score de visibilité dans l'image $i_1$, $i_2$, $i_3$. Le score de visibilité permet d'apprécier la visibilité dans l'image dudit point de squelette, et représente ainsi donc un indicateur de fiabilité des coordonnées bidimensionnelles du point de squelette.

Le calculateur 20 comprend un extracteur 24 apte à extraire parmi des points de squelette fournis par le détecteur de personnes 11, un point tête pt et un point pied pp, pour chaque personne détectée par le détecteur de personnes 11.

Le calculateur 20 comprend un sélecteur 23 apte à sélectionner parmi ces points tête pt et pied pp une pluralité de paires de points (pt, pp) comprenant un point tête pt un point pied pp associés à une même personne, en fonction de plusieurs critères pris seuls ou en combinaison :

- un score de visibilité associé au point tête pt et/ou au point pied pp, lesdits scores de visibilité pouvant être déduits des scores de visibilités associés aux points de squelette fourni par le détecteur de personnes 11,
- une répartition, une localisation et/ou un nombre de points tête pt et de points pied pp dans l'image $i_1$, $i_2$, $i_3$,
- une proximité temporelle ou géographique des points tête pt et/ou pied pp les uns par rapport aux autres.

Le calculateur 20 comprend un estimateur 21 bidimensionnel apte à déterminer des coordonnées image estimées d'un point tête pt en fonction des coordonnées image (xp, yp) dudit point pied pp et des paramètres de calibration f, θ, c.

Le calculateur 20 comprend un minimiseur 22 apte à minimiser une erreur entre les coordonnées image du point tête pt estimées par l'estimateur 21 et les coordonnées image (xt, yt) du point tête pt issues du détecteur de personnes 11.

L'extracteur 24, le sélecteur 23, l'estimateur 21 et le minimiseur 22 sont avantageusement des briques logicielles du calculateur 20.

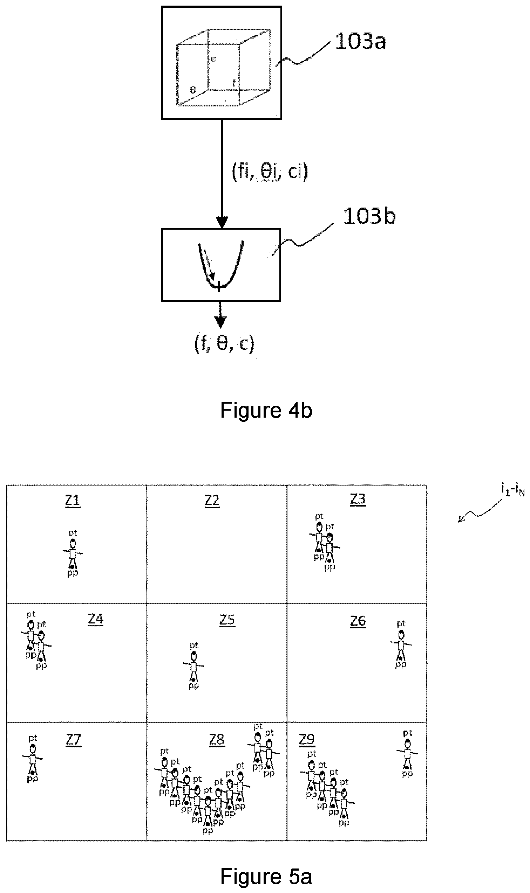

La figure 4a et la figure 4b illustrent les étapes du procédé selon l'invention qui comprennent :

- une étape de sélection 102 dans laquelle un calculateur 20 sélectionne une pluralité de paires de points (pt, pp), chaque paire de point (pt, pp) étant associée à une personne dans une image i, $i_1$, $i_2$, $i_3$ prise par un dispositif de prise de vue 10,
- une étape de détermination 103 des paramètres de calibration du dispositif de prise de vue 10 à partir de la pluralité de paires de points (pt, pp) sélectionnée.

Pour être apte à sélectionner une pluralité de paires de points (pt, pp), le calculateur 20 a généralement besoin d'une pluralité d'images $i_1$, $i_2$, $i_3$ du dispositif de prise de vue 10 acquises à des instants différents dans temps, par exemple plusieurs images issues d'une vidéo acquise par le dispositif de prise de vue 10. Plusieurs images $i_1$, $i_2$, $i_3$ permettent au calculateur 20 de sélectionner une pluralité de paires de points (pt, pp), même si par exemple une seule personne se déplace dans la scène

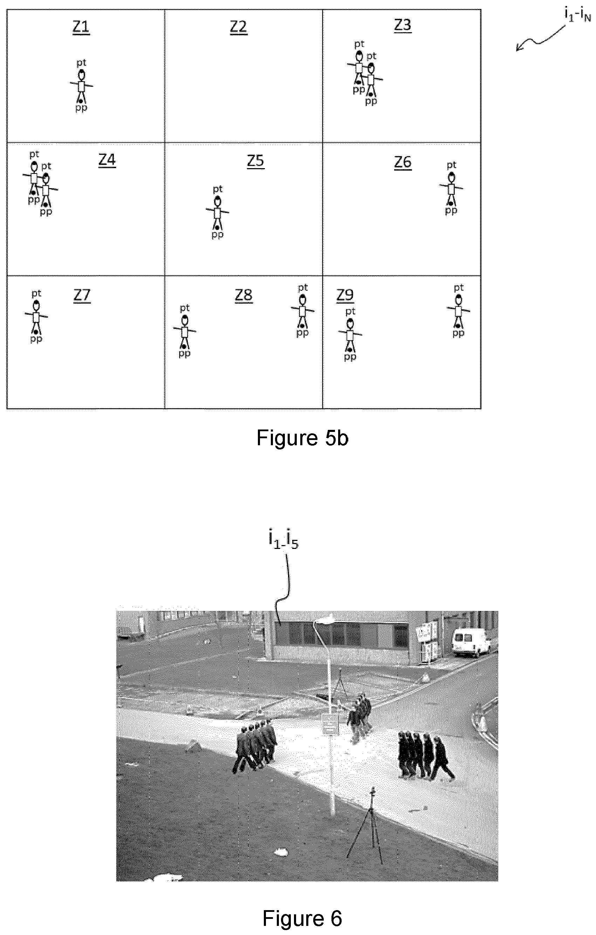

Selon un exemple, la figure 6 représente une superposition de cinq images $i_1$-$i_5$ comprenant trois personnes, les images $i_1$-$i_5$ étant prises à différents instants dans le temps par le dispositif de prise de vue 10. Cette superposition d'images $i_1$-$i_5$ comprend quinze paires de points (pt, pp) puisque les trois personnes sont en mouvement dans le champ du dispositif de prise de vue 10.

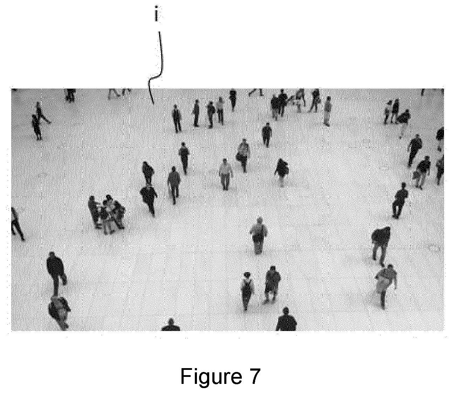

Dans le cas par exemple d'une foule de personnes dans le champ de vision du dispositif de prise de vue 10, une unique image i acquise par le dispositif de prise de vue 10 permet au calculateur 20 de sélectionner une pluralité de paires de points (pt, pp). Une telle image i est par exemple représentée sur la figure 7.

Le calculateur 20 a donc besoin de paires de points (pt, pp) provenant d'au moins une image i, $i_1$, $i_2$, $i_3$, $i_4$, $i_5$ acquise par le dispositif de prise de vue 10 comprenant au moins une personne. Ces paires de points (pt, pp) sont fournis par exemple par un détecteur de personnes 11 tel que décrit précédemment.

Selon l'étape de sélection 102, le calculateur 20 sélectionne une pluralité de paires de points (pt, pp) dans l'au moins une image i, $i_1$, $i_2$, $i_3$, $i_4$, $i_5$ chaque paire de points (pt, pp) comprenant un point tête pt associé à la tête d'une personne et un point pied pp associé aux pieds de ladite personne.

Le calculateur 20 peut sélectionner des paires de points (pt, pp) au fur à mesure d'acquisitions d'images par le dispositif de prise de vue, en particulier au fur et à mesure de la fourniture de points par un détecteur de personnes 11.

Alternativement, le calculateur 20 peut sélectionner la pluralité de paires de points (pt, pp) après plusieurs acquisitions d'images, par exemple après une période de temps d'acquisition prédéfinie d'images acquises par le dispositif de prise de vue 10, en particulier après la fourniture par un détecteur de personnes 11, de points correspondant à plusieurs images.

Chaque point pt, pp d'une paire de points (pt, pp) est repéré dans l'au moins une image i, $i_1$, $i_2$, $i_3$, $i_4$, $i_5$ par des coordonnées image (xt, yt), (xp, yp) comprenant une abscisse image xt, xp et une ordonnée image yt, yp.

Les coordonnées d'un point tête pt dans une image i sont (xt, yt).

Les coordonnées d'un point pied pp dans une image i sont (xp, yp).

Pour une détermination des paramètres de calibration (f, $\theta$, c) plus fiable, il est préférable que la pluralité de paires de points (pt, pp) corresponde le plus possible à une répartition homogène dans la ou les images i, $i_1$, $i_2$, $i_3$, c'est-à-dire à une répartition relativement homogène de personnes dans le champ de vision du dispositif de prise de vue 10.

Ainsi, comme illustré sur les figures 5a et 5b, selon un mode de réalisation particulier, l'au moins une image i, $i_1$, $i_2$, $i_3$, $i_4$, $i_5$ acquise par le dispositif de prise de vue 10 est divisée en une pluralité de zones Z1-Z9, par exemple neuf zones tel qu'illustré sur les figures.

Pour éviter un trop grand déséquilibre entre les différentes zones Z1-Z9, en particulier une zone Z8, Z9 trop peuplée de paires de points (pt, pp) par rapport à une autre zone Z1-Z7, le calculateur 20 sélectionne la pluralité de paires de points (pt, pp) de façon à ce que chaque zone Z1-Z9 comporte un nombre de paires de points (pt, pp) inférieur ou égal à un seuil prédéterminé. Ainsi, la différence de nombre de paires de points entre deux zones ne peut excéder ce seuil prédéterminé.

Selon ce mode de sélection, le calculateur 20 conserve toutes les paires de points d'une zone Z1-Z9 dans laquelle le nombre de paires de points (pt, pp) est inférieur ou égal au seuil prédéterminé.

Selon ce mode de sélection, le calculateur 20 réduit le nombre de paires de points (pt, pp) dans une zone Z1-Z9 dans laquelle le nombre de paires de points (pt, pp) est supérieur au seuil prédéterminé jusqu'à atteindre ledit seuil prédéterminé de nombre de paires de points (pt, pp) dans ladite zone Z1-Z9.

Alternativement, le calculateur 20 sélectionne le nombre de paires de points (pt, pp) dans chaque zone Z1-Z9 jusqu'à atteindre ledit seuil prédéterminé de nombre de paires de points (pt, pp) dans ladite zone Z1-Z9, et arrête de sélectionner des paires de points par exemple après l'écoulement d'une durée prédéfinie. Certaines zones seront donc peuplées du maximum de paires de points (pt, pp) correspondant au seuil prédéterminé, et d'autres zones seront moins peuplées de paires de points (pt, pp) par exemple parce-que le dispositif de prise de vue a capturé moins de personnes dans ces autres zones pendant la durée prédéfinie.

Sur la figure 5a, les paires de points (pt, pp) illustrés sont issus d'une pluralité de N images $i_1$-$i_N$ acquises par le dispositif de prise de vue 10 par exemple pendant 10 secondes, les points pt, pp représentés correspondant à des personnes détectées par un détecteur de personnes 11.

Sur la figure 5b, les paires de points (pt, pp) illustrés représentent la pluralité de paires de points (pt, pp) sélectionnés par le calculateur 20 de façon à ce que chaque zone Z1-Z9 comporte un nombre de paires de points (pt, pp) inférieur ou égal au seuil prédéterminé, ici égal à deux.

Par exemple, la sélection de paires de points (pt, pp) pour limiter le nombre de paires de points (pt, pp) dans une zone Z1-Z9 à un nombre inférieur ou égal à au seuil prédéterminé, est aléatoire ou pseudo aléatoire.

Par exemple, la sélection de paires de points (pt, pp) pour limiter le nombre de paires de points (pt, pp) à un nombre inférieur ou égal à au seuil prédéterminé, est tel qu'une répartition des paires de points la plus uniforme possible dans la zone est privilégiée.

Par exemple, la sélection de paires de points (pt, pp) pour limiter le nombre de paires de points (pt, pp) à un nombre inférieur ou égal à au seuil prédéterminé, est telle que pour deux paires de points (pt, pp) de coordonnées image proche géographiquement dans l'image, si la distance entre deux points tête pt et/ou deux points pied pp est inférieure à une distance prédéterminée, une des paires de points (pt, pp) peut être supprimée.

Pour éviter une redondance ou quasi-redondance de paires de points (pt, pp) trop proches les uns des autres géographiquement dans une image, le calculateur peut sélectionner des paires de points (pt, pp) correspondant à des images du dispositif de prise de vue par le calculateur espacées dans le temps d'une période prédéterminée, par exemple une période comprise entre 100 ms et 500 ms.

L'étape de sélection 102 comprend une étape de filtrage 101 optionnelle, dans laquelle le calculateur 20 filtre des paires de points (pt, pp) en fonction d'un critère de visibilité desdits points pour la sélection de la pluralité de paires de points (pt, pp).

Par exemple, le critère de visibilité est basé sur un score de visibilité associé aux points tête pt et pied pp, fourni par le détecteur de personnes 11. Selon un exemple de réalisation, en dessous d'un seuil de score de visibilité associé à un point tête pt ou à un point pied pp d'une personne, la paire de points (pt, pp) correspondante n'est pas retenue dans la pluralité de paires de points.

Selon une étape de détermination 103, un estimateur 21 bidimensionnel du calculateur 20 détermine des coordonnées image estimées (x't, y't) d'un point tête pt en fonction des coordonnées image (xp, yp) du point pied pp d'une personne et des paramètres de calibration (f, θ, c).

Pour déterminer les coordonnées image estimées (x't, y't) d'un point tête pt en fonction des coordonnées image (xp, yp) du point pied pp, l'estimateur 21 fait les approximations suivantes :

- dans le monde réel tridimensionnel de l'environnement du dispositif de prise de vue, les personnes sont toutes de même taille, c'est à dire que tous les segments pied-tête PT ont une même hauteur H prédéterminée
- dans le monde réel tridimensionnel de l'environnement du dispositif de prise de vue, les personnes se tiennent toutes debout et droites, c'est-à-dire que tous les segments pied-tête PT sont verticaux.

La matrice de projection P du dispositif de prise de vue 10 est définie en fonction des paramètres de calibration (f, θ, c) de la manière suivante :

$$P = \begin{bmatrix} f & 0 & 0 \\ 0 & f & 0 \\ 0 & 0 & 1 \end{bmatrix} \cdot \begin{bmatrix} 1 & 0 & 0 \\ 0 & \cos(\theta) & -\sin(\theta) \\ 0 & \sin(\theta) & \cos(\theta) \end{bmatrix} \cdot \begin{bmatrix} 1 & 0 & 0 & 0 \\ 0 & 1 & 0 & -c \\ 0 & 0 & 1 & 0 \end{bmatrix}$$

$$P = \begin{bmatrix} f & 0 & 0 & 0 \\ 0 & f \cdot \cos(\theta) & -f \cdot \sin(\theta) & -f \cdot c \cdot \cos(\theta) \\ 0 & \sin(\theta) & \cos(\theta) & -c \cdot \sin(\theta) \end{bmatrix}$$

Le référentiel terrestre et le repère image sont tels que représentés sur la figure 1.

A un point réel de coordonnées (X,Y,Z) dans le référentiel terrestre correspond un point image de coordonnées (x,y) dans le repère image, via les paramètres de calibration (f, θ, c).

Plus précisément, on peut obtenir une représentation homogène (xh,yh,wh) d'un point image par multiplication par la matrice de projection P de la représentation homogène (Xh,Yh,Zh,1) d'un point réel correspondant, selon la relation suivante :

$$\begin{bmatrix} xh \\ yh \\ wh \end{bmatrix} = P \cdot \begin{bmatrix} Xh \\ Yh \\ Zh \\ 1 \end{bmatrix} = \begin{bmatrix} f & 0 & 0 & 0 \\ 0 & f \cdot \cos(\theta) & -f \cdot \sin(\theta) & -f \cdot c \cdot \cos(\theta) \\ 0 & \sin(\theta) & \cos(\theta) & -c \cdot \sin(\theta) \end{bmatrix} \cdot \begin{bmatrix} Xh \\ Yh \\ Zh \\ 1 \end{bmatrix}$$

$$\begin{bmatrix} xh \\ yh \\ wh \end{bmatrix} = \begin{bmatrix} f \cdot Xh \\ f \cdot \cos(\theta) \cdot Yh - f \cdot \sin(\theta) \cdot Zh - f \cdot c \cdot \cos(\theta) \\ \sin(\theta) \cdot Yh + \cos(\theta) \cdot Zh - c \cdot \sin(\theta) \end{bmatrix}$$

En repassant en coordonnées cartésiennes, nous obtenons la relation suivante entre un point image de coordonnées (x,y) dans le repère image et un point réel de coordonnées (X,Y,Z) dans le référentiel terrestre:

$$\begin{bmatrix} x \\ y \end{bmatrix} = \begin{bmatrix} f \cdot X/(\sin(\theta) \cdot Y + \cos(\theta) \cdot Z - c \cdot \sin(\theta)) \\ (f \cdot \cos(\theta) \cdot Y - f \cdot \sin(\theta) \cdot Z - f \cdot c \cdot \cos(\theta))/(\sin(\theta) \cdot Y + \cos(\theta) \cdot Z - c \cdot \sin(\theta)) \end{bmatrix}$$

Selon les approximations faites par l'estimateur 21 du calculateur 20, toute personne dans le champ de vision du dispositif 10 a un segment pied-tête PT vertical et de hauteur H.

Ainsi, pour une personne, nous pouvons écrire que dans le référentiel terrestre: Xp=Xt, Zp=Zt, Yp=0 et Yt=H.

Ainsi, les coordonnées image (xt, yt) d'un point tête (pt) et les coordonnées image (xp, yp) d'un point pied (pp), peuvent être exprimées en fonction de leur coordonnées réelles (Xt, Yt, Zt), (Xp, Yp, Zp) et des paramètres de calibration (f, θ, c) de la manière suivante :

$$\begin{bmatrix} xp \\ yp \end{bmatrix} = \frac{f}{\cos(\theta) \cdot Zp - c \cdot \sin(\theta)} \cdot \begin{bmatrix} Xp \\ -\sin(\theta) \cdot Zp - c \cdot \cos(\theta) \end{bmatrix}$$

$$\begin{bmatrix} xt \\ yt \end{bmatrix} = \frac{f}{H \cdot \sin(\theta) + \cos(\theta) \cdot Zp - c \cdot \sin(\theta)} \cdot \begin{bmatrix} Xp \\ Yp \cdot \cos(\theta) - \sin(\theta) \cdot Zp - c \cdot \cos(\theta) \end{bmatrix}$$

Sur la base de ces expressions et après simplification, l'estimateur 21 du calculateur 20 détermine des coordonnées image estimées (x't, y't) d'un point tête pt d'une personne dans une image i selon les équations suivantes :

$$x't = \frac{\cos(\theta) \cdot c \cdot \dfrac{\sin(\theta) \cdot yp - f \cdot \cos(\theta)}{\cos(\theta) \cdot yp + f \cdot \sin(\theta)} - c \cdot \sin(\theta)}{H \cdot \sin(\theta) + \cos(\theta) \cdot c \cdot \dfrac{\sin(\theta) \cdot yp - f \cdot \cos(\theta)}{\cos(\theta) \cdot yp + f \cdot \sin(\theta)} - c \cdot \sin(\theta)} \cdot xp_i$$

et

$$y't = \frac{H \cdot \cos(\theta) - \sin(\theta) \cdot c \cdot \dfrac{\sin(\theta) \cdot yp - f \cdot \cos(\theta)}{\cos(\theta) \cdot yp + f \cdot \sin(\theta)} - c \cdot \cos(\theta)}{H \cdot \sin(\theta) + \cos(\theta) \cdot c \cdot \dfrac{\sin(\theta) \cdot yp - f \cdot \cos(\theta)}{\cos(\theta) \cdot yp + f \cdot \sin(\theta)} - c \cdot \sin(\theta)} \cdot f$$

Les unités relatives à ces équations sont les suivantes :

- la hauteur H moyenne d'une personne est en centimètres,
- la distance focale f est en pixels,
- l'angle θ est en radians,
- la hauteur c est en centimètres.

La hauteur H est un paramètre à ajuster. Il représente une hauteur moyenne des personnes.

Ensuite, un minimiseur 22 du calculateur 20 détermine les paramètres de calibration (f, θ, c) en effectuant une minimisation d'erreur entre lesdites coordonnées image estimées (x't, y't) du point tête (pt) par l'estimateur bidimensionnel 21 et lesdites coordonnées image (xt, yt) du point tête (pt) correspondante.

Par exemple, la hauteur H est fixée à une valeur prédéterminée correspondant à une taille moyenne d'une personne, 160 cm.

La minimisation d'erreur comprend par exemple l'utilisation d'un algorithme de régression minimisant une fonction d'erreur quadratique moyenne entre desdites coordonnées image estimées (x't, y't) du point tête pt par l'estimateur 21, et lesdites coordonnées image (xt, yt) du point tête pt correspondante.

Pour une pluralité de paires de points (pt, pp) comprenant M paires de points (pt, pp), le but est alors de trouver les paramètres de calibration (f, θ, c) qui minimisent la fonction d'erreur suivante :

$$(f, \theta, c) = \underset{(f,\theta,c)}{\operatorname{argmin}} \frac{1}{M}\sum_{1}^{M}\left((xt - x't)^2 + (yt - y't)^2\right)$$

Avantageusement, la minimisation d'erreur comprend une recherche exhaustive des paramètres de calibration (f, θ, c) sur un domaine discrétisé prédéterminé.

Selon un exemple de réalisation, le domaine est défini par les trois plages suivantes $f \in [0.1 \cdot hi, 6 \cdot hi]$, $\theta \in \left[-\frac{\pi}{4}, \frac{\pi}{2}\right]$, $c \in [50, 4500]$, avec hi étant la hauteur de l'image exprimée en pixels, chaque plage étant discrétisée en cinquante valeurs réparties de manière uniforme sur chacune des plages.

Ainsi, 125000 valeurs de triplets de paramètres de calibration (f, θ, c) sont vérifiées, les paramètres de calibration (f, θ, c) minimisant l'erreur entre les coordonnées image estimées (x't, y't) du point tête pt par l'estimateur bidimensionnel et les coordonnées image (xt, yt) du point tête pt étant ceux retenus par le minimiseur 22 du calculateur 20.

Dans le cas de l'utilisation d'un algorithme de régression minimisant une fonction d'erreur quadratique moyenne, les paramètres de calibration (f, θ, c) minimisant la fonction d'erreur quadratique moyenne sont ceux retenus par le minimiseur 22 du calculateur 20.

La minimisation d'erreur comprend par exemple l'utilisation d'une méthode de descente de gradient.

En particulier, la méthode de descente de gradient est basée sur l'algorithme L-BFGS-B.

Avantageusement, la minimisation d'erreur combine deux exemples proposées ci-dessus. Ainsi, la minimisation d'erreur comprend deux étapes, une première étape 103a comprenant une recherche exhaustive de paramètres de calibration intermédiaires (fi, θi, ci) sur un domaine discrétisé prédéterminé, et une deuxième étape 103b comprenant l'utilisation d'une méthode de descente de gradient initialisée sur lesdits paramètres de calibration intermédiaires (fi, θi, ci) issus de la première étape.

Dans le cas de l'utilisation d'un algorithme de régression minimisant une fonction d'erreur quadratique moyenne, la méthode de descente de gradient est initialisée sur les paramètres de calibration intermédiaires (fi, θi, ci) minimisant la fonction d'erreur suivante :

$$(fi, \theta i, ci) = \underset{(f,\theta,c)}{\operatorname{argmin}} \frac{1}{M}\sum_{1}^{M}\left((xt - x't)^2 + (yt - y't)^2\right)$$

Le nombre d'images nécessaires pour le procédé de l'invention dépend de la méthode de sélection du calculateur.

Selon le procédé de l'invention et selon une première méthode, le calculateur 20 sélectionne la pluralité de paires de points (pt, pp) parmi des points relatifs à un nombre d'images $i_1$-$i_N$ correspondant à une période de temps d'acquisition prédéfinie d'images acquises par le dispositif de prise de vue 10.

Selon une deuxième méthode dans laquelle la sélection des paires de points (pt, pp) par le calculateur 20 est réalisée au fur à mesure d'acquisitions d'images par le dispositif de prise de vue 10, le nombre d'images $i_1$-$i_N$ correspond à un nombre de paires de points (pt, pp) sélectionnés atteint par rapport une valeur prédéterminée, de manière globale ou relativement à des zones Z1-Z9 dans les images.

**Revendications**

1. Procédé de détermination de paramètres de calibration (f, θ, c) d'un dispositif de prise de vue (10) par un calculateur (20), à partir d'au moins une image (i, $i_1$-$i_N$) acquise par le dispositif de prise de vue (10) comprenant plusieurs personnes ou d'une pluralité d'images (i, $i_1$-$i_N$) acquises par le dispositif de prise de vue (10) à des instants différents dans le temps comprenant au moins une personne, le procédé de détermination de paramètres de calibration comprenant les étapes suivantes :

- une étape de sélection (102) par le calculateur (20) d'une pluralité de paires de points (pt, pp) dans l'au moins une image (i, i$_1$-i$_N$), chaque paire de points (pt, pp) comprenant un point tête (pt) associé à la tête d'une personne et un point pied (pp) associé aux pieds de ladite personne, chaque point (pt, pp) d'une paire de points (pt, pp) étant repéré dans l'au moins une image (i, i$_1$-i$_N$) par des coordonnées image comprenant une abscisse image (xt, xp) et une ordonnée image (yt, yp), chaque paire de points (pt, pp) définissant un segment pied-tête (PT) dans le monde réel tridimensionnel de l'environnement du dispositif de prise de vue (10),
- une étape de détermination (103) par le calculateur (20) des paramètres de calibration (f, θ, c), dans laquelle le calculateur (20) comprend un estimateur (21) apte à déterminer une ordonnée image estimée (y't) d'un point tête (pt) en fonction de l'ordonnée image (yp) du point pied (pp) d'une personne et des paramètres de calibration (f, θ, c) par une approximation que dans le monde réel tridimensionnel de l'environnement du dispositif de prise de vue, tous les segments pied-tête ont une même hauteur (H) prédéterminée et sont verticaux,

**caractérisé en ce que** l'estimateur (21) est bidimensionnel **en ce qu'**il est en outre apte à déterminer une abscisse image estimée (x't) d'un point tête (pt) en fonction des coordonnées image (xp, yp) du point pied (pp), la détermination des paramètres de calibration (f, θ, c) comprenant une minimisation d'erreur entre lesdites coordonnées image estimées (x't, y't) du point tête (pt) par l'estimateur bidimensionnel et lesdites coordonnées image (xt, yt) du point tête (pt) correspondante.

2. Procédé de détermination de paramètres de calibration (f, θ, c) selon la revendication précédente, les paramètres de calibration (f, θ, c) comprenant :

- un angle d'inclinaison transverse (θ) du dispositif de prise de vue (10),
- une distance focale (f) du dispositif de prise de vue (10),
- une hauteur (c) à laquelle est disposé le dispositif de prise de vue (10), l'estimateur (21) déterminant les coordonnées image estimées (x't, y't) selon les équations suivantes :

$$x't = \frac{\cos(\theta) \cdot c \cdot \dfrac{\sin(\theta) \cdot yp - f \cdot \cos(\theta)}{\cos(\theta) \cdot yp + f \cdot \sin(\theta)} - c \cdot \sin(\theta)}{H \cdot \sin(\theta) + \cos(\theta) \cdot c \cdot \dfrac{\sin(\theta) \cdot yp - f \cdot \cos(\theta)}{\cos(\theta) \cdot yp + f \cdot \sin(\theta)} - c \cdot \sin(\theta)} \cdot xp \text{ et}$$

$$y't = \frac{H \cdot \cos(\theta) - \sin(\theta) \cdot c \cdot \dfrac{\sin(\theta) \cdot yp - f \cdot \cos(\theta)}{\cos(\theta) \cdot yp + f \cdot \sin(\theta)} - c \cdot \cos(\theta)}{H \cdot \sin(\theta) + \cos(\theta) \cdot c \cdot \dfrac{\sin(\theta) \cdot yp - f \cdot \cos(\theta)}{\cos(\theta) \cdot yp + f \cdot \sin(\theta)} - c \cdot \sin(\theta)} \cdot f$$

3. Procédé de détermination de paramètres de calibration (f, θ, c) selon l'une quelconque des revendications précédentes, la minimisation d'erreur comprenant l'utilisation d'un algorithme de régression minimisant une fonction d'erreur quadratique moyenne entre lesdites coordonnées image estimées (x't, y't) du point tête (pt) par l'estimateur (21) et lesdites coordonnées image (xt, yt) du point tête (pt) correspondante.

4. Procédé de détermination de paramètres de calibration (f, θ, c) selon l'une quelconque des revendications précédentes, la minimisation d'erreur comprenant une recherche exhaustive des paramètres de calibration (f, θ, c) sur un domaine discrétisé prédéterminé.

5. Procédé de détermination de paramètres de calibration (f, θ, c) selon l'une quelconque des revendications précédentes, la minimisation d'erreur comprenant l'utilisation d'une méthode de descente de gradient.

6. Procédé de détermination de paramètres de calibration (f, θ, c) selon l'une quelconque des revendications 1 à 3, la minimisation d'erreur comprenant deux étapes, une première étape (103a) comprenant une recherche exhaustive de paramètres de calibration intermédiaires (fi, θi,ci) sur un domaine discrétisé prédéterminé, et une deuxième étape (103b) comprenant l'utilisation d'une méthode de descente de gradient initialisée sur lesdits paramètres de calibration intermédiaires (fi, θi,ci) issus de la première étape.

7. Procédé de détermination de paramètres de calibration selon l'une quelconque des revendications précédentes, l'étape de sélection comprenant en outre une étape de filtrage (101) dans laquelle le calculateur (20) filtre des paires de points (pt, pp) de la pluralité de paires de points (pt, pp) en fonction d'un critère de visibilité desdits points, pour la sélection de la pluralité de paires de points (pt, pp).

8. Procédé de détermination de paramètres de calibration selon l'une quelconque des revendications précédentes, l'au moins une image (i, $i_1$-$i_N$) acquise par le dispositif de prise de vue (10) étant divisée en une pluralité de zones (Z1-Z9), la pluralité de paires de points (pt, pp) étant sélectionnée par le calculateur (20) dans l'étape de sélection (102) de façon à ce que chaque zone (Z1-Z9) comporte un nombre de paires de points (pt, pp) inférieur ou égal à un seuil prédéterminé.

9. Procédé de détermination de paramètres de calibration selon l'une quelconque des revendications précédentes, la pluralité de paires de points (pt, pp) étant issue d'une pluralité d'images acquises par le dispositif de prise de vue (10), le nombre d'images correspondant à une période de temps d'enregistrement prédéfinie d'images par le dispositif de prise de vue (10).

10. Produit programme d'ordinateur comprenant les instructions de programme mettant en œuvre les étapes du procédé de détermination de paramètres de calibration selon l'une quelconque des revendications 1 à 9, lorsque les instructions de programme sont exécutées par un ordinateur.

Figure 1

Figure 2

Figure 3

Figure 4a

$$(f_i, \theta_i, c_i)$$

$$(f, \theta, c)$$

Figure 4b

Figure 5a

Figure 5b

Figure 6

Figure 7

Europäisches
Patentamt

European
Patent Office

Office européen
des brevets

# RAPPORT DE RECHERCHE EUROPEENNE

Numéro de la demande

EP 22 20 0396

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SHENGZHE LI ET AL: "A simplified nonlinear regression method for human height estimation in video surveillance", EURASIP JOURNAL ON IMAGE AND VIDEO PROCESSING, vol. 2015, no. 1, 12 octobre 2015 (2015-10-12), XP055614623, DOI: 10.1186/s13640-015-0086-1 * abrégé; figures 1-3 * * Eqs. 1-12 * * "2. Proposed method"; page 2 - page 4 * * "Introduction"; page 1 - page 2 * ----- | 1,3-10 | INV. G06T7/80 |
| A | LIU JINGCHEN ET AL: "Automatic Surveillance Camera Calibration without Pedestrian Tracking", PROCEDINGS OF THE BRITISH MACHINE VISION CONFERENCE 2011 , 1 janvier 2011 (2011-01-01), pages 117.1-117.11, XP055930785, DOI: 10.5244/C.25.117 ISBN: 978-1-901725-43-8 Extrait de l'Internet: URL:http://www.bmva.org/bmvc/2011/proceedings/paper117/paper117.pdf * le document en entier * ----- -/-- | 1-10 | DOMAINES TECHNIQUES RECHERCHES (IPC) G06T |

Le présent rapport a été établi pour toutes les revendications

| Lieu de la recherche | Date d'achèvement de la recherche | Examinateur |
|---|---|---|
| Munich | 22 mars 2023 | Rodes Arnau, Isabel |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
..............................................................................
& : membre de la même famille, document correspondant

EPO FORM 1503 03.82 (P04C02)

page 1 de 2

Europäisches Patentamt

European Patent Office

Office européen des brevets

## RAPPORT DE RECHERCHE EUROPEENNE

Numéro de la demande

EP 22 20 0396

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Brouwers Guido M Y E ET AL: "Automatic Calibration of Stationary Surveillance Cameras in the Wild", Cornell University Library/ Computer Science /Computer Vision and Pattern Recognition, 1 janvier 2016 (2016-01-01), XP055930777, Cham DOI: 10.1007/978-3-319-48881-3 ISBN: 978-3-319-48881-3 Extrait de l'Internet: URL:https://link.springer.com/content/pdf/10.1007/978-3-319-48881-3_52.pdf [extrait le 2022-06-13] * le document en entier * ----- | 1-10 | |
| A | XU YAN ET AL: "Estimating 3D Camera Pose from 2D Pedestrian Trajectories", 2020 IEEE WINTER CONFERENCE ON APPLICATIONS OF COMPUTER VISION (WACV), IEEE, 1 mars 2020 (2020-03-01), pages 2568-2577, XP033771180, DOI: 10.1109/WACV45572.2020.9093539 * le document en entier * ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 22 mars 2023 | Rodes Arnau, Isabel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LI, S. ; NGUYEN, V.H. ; MA, M.** *A simplified nonlinear régression method for human height estimation in video surveillance*